# EUROPÄISCHE PATENTSCHRIFT

(11) **EP 3 198 174 B1**
(45) Veröffentlichungstag und Bekanntmachung des Hinweises auf die Patenterteilung: **22.04.2020**
(21) Anmeldenummer: 14777029.1
(22) Anmeldetag: 23.09.2014
(51) Int. Cl.: F16J 15/06, F16J 15/12, F16L 23/18, F16L 55/24, F16L 23/04, F16L 17/06, F16J 13/06

(54) **BÖRDELDICHTRING**
FOLDED SEALING RING
BAGUE D'ÉTANCHÉITÉ À REBORD

(43) Veröffentlichungstag der Anmeldung: 02.08.2017
(73) Patentinhaber: Fr. Jacob Söhne GmbH & Co. KG, 32457 Porta Westfalica (DE)
(72) Erfinder: BRENDEL, Bernhard, 32339 Espelkamp (DE); SCHMIDT, Uwe, 63814 Mainaschaff (DE); BRAUN, Uwe, 31582 Nienburg (DE); JACOB, Patrick, 32429 Minden (DE)
(74) Vertreter: Dantz, Jan Henning
(86) Internationale Anmeldenummer: PCT/EP2014/070213
(87) Internationale Veröffentlichungsnummer: WO 2016/045698

(56) Entgegenhaltungen:
- DE-U1- 20 304 981
- US-A- 2 774 621
- US-A- 6 113 482
- US-A1- 2010 253 009
- US-B1- 7 390 580
- "DIN 53505:2000 Prüfung von Kautschuk und Elastomeren - Härteprüfung nach Shore A und Shore D", DEUTSCHE NORMEN. DIN N,, vol. 53505, 1 August 2000 (2000-08-01), pages 1-5, XP009135163,

## Beschreibung

Die vorliegende Erfindung betrifft einen Bördeldichtring nach dem Oberbegriff des Anspruches 1.

Die EP 1 245 890 offenbart einen Bördeldichtring, der zwei benachbarte Rohre dicht miteinander verbindet. Hierfür wird ein Steg des Bördeldichtringes zwischen zwei Flansche der Rohre eingefügt, und dann werden die Flansche durch einen äußeren Spannring zusammengedrückt, so dass der Steg dichtend zwischen den beiden Flanschen anliegt. Eine solche Verbindung zweier Rohre hat sich an sich bewährt und kann gerade für Rohre mit großen Durchmessern in industriellen Anlagen gut eingesetzt werden.

Bei der Montage von Rohrleitungsanlagen besteht allerdings das Problem, dass Bördeldichtringe in ein Rohr fallen können und die Entfernung des Bördeldichtringes aus dem Rohrleitungssystem erhebliche Rückbaukosten verursachen könnte. Daher können Rückstände von Bördeldichtringen gegebenenfalls nach einer Zerkleinerung im Produktionsprozess in Rohrleitungsanlagen enthalten sein. Gerade in der Nahrungsmittel- und Pharmaindustrie muss auf höchste Reinheit geachtet werden, so dass eine Kontamination nicht akzeptiert werden kann.

Die US 7,390,580 offenbart einen O-Ring mit zwei Flanschabschnitten, der zwischen zwei Rohrleitungen einer Sanitärinstallation einfügbar ist. Der O-Ring enthält ein ferromagnetisches Pulver und bei einer Detektion von Partikeln des O-Ringes kann ein Materialsstrom in den Rohrleitungen umgeleitet werden, um eine Kontaminierung mit dem Dichtunsmaterial zu vermeiden.

In der US 6,113,482 ist ein über Metalldetektoren detektierbares Dichtungsmaterial offenbart, das eine Mischung verschiedener Metalle enthält.

Es ist daher Aufgabe der vorliegenden Erfindung, einen Bördeldichtring zu schaffen, mittels dem eine Kontaminierung in einem Rohrleitungssystem sicher vermieden werden kann.

Diese Aufgabe wird mit einem Bördeldichtring mit den Merkmalen des Anspruches 1 gelöst.

Erfindungsgemäß wird ein Bördeldichtring bereitgestellt, der aus einem Material mit einem metallischen Anteil hergestellt ist, wobei der metallische Anteil im Wesentlichen homogen in dem Bördeldichtring verteilt ist. Dadurch kann, unabhängig welches Stück Bördeldichtring versehentlich in den Produktionsprozess gelangt, eine Detektierung an einem Metalldetektor vorgenommen werden.

Der metallische Anteil des Materials des Bördeldichtringes liegt vorzugsweise in einem Bereich zwischen 0,5 Gew.-% und 10 Gew.-%, insbesondere 1 Gew.-% bis 3 Gew.-%. Dadurch kann gewährleistet werden, dass die übrigen Eigenschaften des Bördeldichtringes, insbesondere die Elastizität und die Rückstellkräfte, ausreichend sind, um bei der Abdichtung zweier Rohre keine Nachteile in Kauf nehmen zu müssen. Zudem reicht ein geringer Anteil an metallischem Material aus, um eine Detektierbarkeit herstellen zu können. Für eine homogene Verteilung des metallischen Anteils ist dieses aus metallischen Partikeln gebildet, die eine Größe von weniger als 100 µm, insbesondere weniger als 60 µm oder 40 µm, besitzen. Dadurch beeinträchtigen die metallischen Partikel auch nicht die Oberflächeneigenschaften des Bördeldichtringes nachteilig.

Der Bördeldichtring ist auf Basis eines organischen Materials mit Polydimethylsiloxan hergestellt. Dies ermöglicht die Herstellung des Bördeldichtringes derart, dass dieser für den Lebensmittelkontakt gemäß der Verordnung (EG) Nr. 1935/2004 und/oder der Norm FDA 21 CFR Ch. I, § 177.2600 zugelassen wird.

Um eine Abdichtung auch für den Lebensmittelbereich oder andere Bereiche mit hohen Reinheitsanforderungen gewährleisten zu können, besteht der Bördeldichtring aus einem extrudierten Strang, der an einer Nahtstelle durch Vulkanisation fixiert ist. Gewöhnliche Bördeldichtringe werden ebenfalls extrudiert und dann an der Naht- oder Verbindungsstelle miteinander verklebt. Der Einsatz von Klebemittel ist allerdings für viele Bereiche unerwünscht, da sich das Klebemittel lösen kann, was zu einer Kontaminierung führt. Durch die Vulkanisation der Nahtstelle kann auf den Einsatz von Klebemittel verzichtet werden.

Als metallische Partikel wird vorzugsweise Eisen eingesetzt, insbesondere auch ein Eisenoxid. Auch andere metallische Materialien können verwendet werden.

Der Bördeldichtring weist vorzugsweise eine Shore-Härte A nach DIN 53505-A bei 23 °C und d = 6 mm von 50 bis 65 auf. Die Reißfestigkeit des Materials des Bördeldichtringes kann nach DIN 53504-S1 bei 23 °C und d = 2 mm bestimmt werden, wobei diese dann in einem Bereich zwischen 7 bis 11 N/mm², insbesondere 8 bis 10 N/mm², liegt.

Die Reißdehnung des Materials des Bördeldichtringes liegt nach DIN 53504-S1 bei 23 °C und d = 2 mm bei über 300 % insbesondere 400 %. Dadurch wird ein sehr elastisches Material bereitgestellt, das auch bei hohen Druckbelastungen für eine sichere Abdichtung sorgt. Die Rückprallelastizität nach DIN 53512 beträgt bei 23 °C und d = 12 mm mindestens 30 %, vorzugsweise zwischen 45 % und 55 %.

Bei einer Vorrichtung ist ein Metalldetektor und eine in Förderrichtung hinter dem Metalldetektor angeordnete Schleuse zum Entfernen einer metallhaltigen Substanz aus der Rohrleitung vorgesehen, wobei zur Herstellung des Rohrleitungssystems mindestens ein Bördeldichtring verwendet wird, der aus einem Material mit einem metallischen Anteil hergestellt ist, so dass bei Ablösen von Bestandteilen des Bördeldichtringes eine Erfassung an dem Metalldetektor und ein Ausschleusen an der Schleuse durchführbar ist. Selbst wenn daher bei der Montage oder in einem späteren Prozessablauf ein Bestandteil des Bördeldichtringes sich lösen sollte, kann sicher verhindert werden, dass der Produktionsprozess mit einem kontaminierten Material betrieben wird, denn durch die Verwendung von einem Bördeldichtring mit einem metallischen Anteil kann bei Ablösen eines Bestandteils oder einer Zerkleinerung des Bördeldichtringes eine solche Kontaminierung durch einen Bestandteil des Bördeldichtringes an dem Metalldetektor erkannt werden. Der Erfindung liegt dabei der Gedanke zugrunde, eine zusätzliche Sicherheit gegen Kontaminierung in einem Produktionsprozess bereitstellen zu können, wobei auch ansonsten zuverlässige Dichtmittel im Schadensfall nicht zu einer Kontaminierung des Produktionsprozesses beitragen können.

Die Erfindung wird nachfolgend anhand eines Ausführungsbeispiels mit Bezug auf die beigefügten Zeichnungen näher erläutert. Es zeigen:

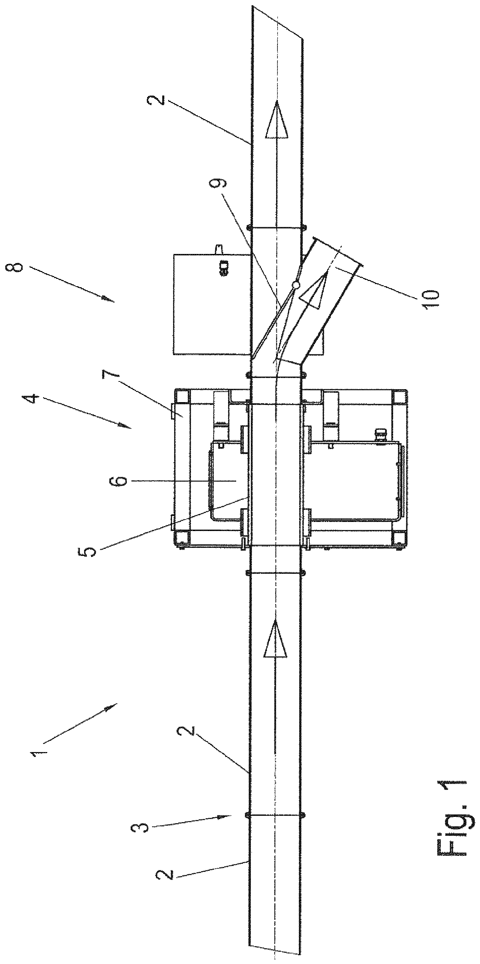

- Figur 1: eine Vorrichtung zur Erfassung von Bestandteilen eines Bördeldichtringes;
- Figur 2: eine Verbindung zweier benachbarter Rohre der Vorrichtung der Figur 1;
- Figur 3: eine Ansicht eines Bördeldichtringes für die Rohrverbindung der Figur 2;
- Figur 4: eine Ansicht bei der Montage des Bördeldichtringes, und
- Figur 5: eine Ansicht bei der Endmontage des Bördeldichtringes.

Eine schematisch dargestellte Vorrichtung 1 zur Erfassung von Bestandteilen eines Bördeldichtringes in einer Rohrleitungsanlage kann beispielsweise in einer Produktionsanlage für Nahrungsmittel, einer chemischen oder pharmazeutischen Anlage oder einer Anlage in einem anderen Bereich verwendet werden. Die Vorrichtung 1 umfasst eine Vielzahl von Rohren 2, die an Verbindungsstellen 3 dichtend miteinander verbunden sind und eine Rohrleitungsanlage ausbilden. Als Rohre 2 können nicht nur zylinderförmige Körper eingesetzt werden, sondern auch Rohrbögen, Rohrabzweigungen oder andere rohrförmige Körper, die in der vorliegenden Anmeldung als "Rohr" bezeichnet werden.

An mindestens einer Stelle der Rohrleitungsanlage ist ein Metalldetektor 4 vorgesehen, der ein Rohr 5 aus einem nichtmetallischen Material aufweist, das von einem Detektorgehäuse 6 umgeben ist. Das Detektorgehäuse 6 kann an einem Rahmen 7 montiert sein. Fließt durch das Rohr 5 aus nichtmetallischem Material ein metallischer Bestandteil, kann dies der Metalldetektor 4 erfassen und dann an eine Steuerung weitergeben.

Die Steuerung ist mit einer Schleuse 8 verbunden, die in Strömungsrichtung des Produktstromes hinter dem Metalldetektor 4 angeordnet ist. Die Schleuse 8 umfasst eine verschwenkbare Klappe 9, um den Materialstrom von dem Metalldetektor 4 im Normalbetrieb zu einem benachbarten Rohr 2 zu leiten. Sollte ein metallischer Bestandteil an dem Metalldetektor 4 detektiert werden, wird über die Steuerung die verschwenkbare Klappe 9 umgeschaltet, so dass der Produktionsstrom in eine Abzweigung 10 gelenkt wird und dort gesammelt werden kann. Somit wird verhindert, dass ein kontaminierter Abschnitt des Materialstromes in den normalen Produktionsprozess zu dem Rohr 2 gelangt.

Der Metalldetektor 4 kann sämtliche metallische Partikel erfassen, die sowohl pulverförmig, flüssig oder als metallische Partikel in anderen Materialien enthalten sein können.

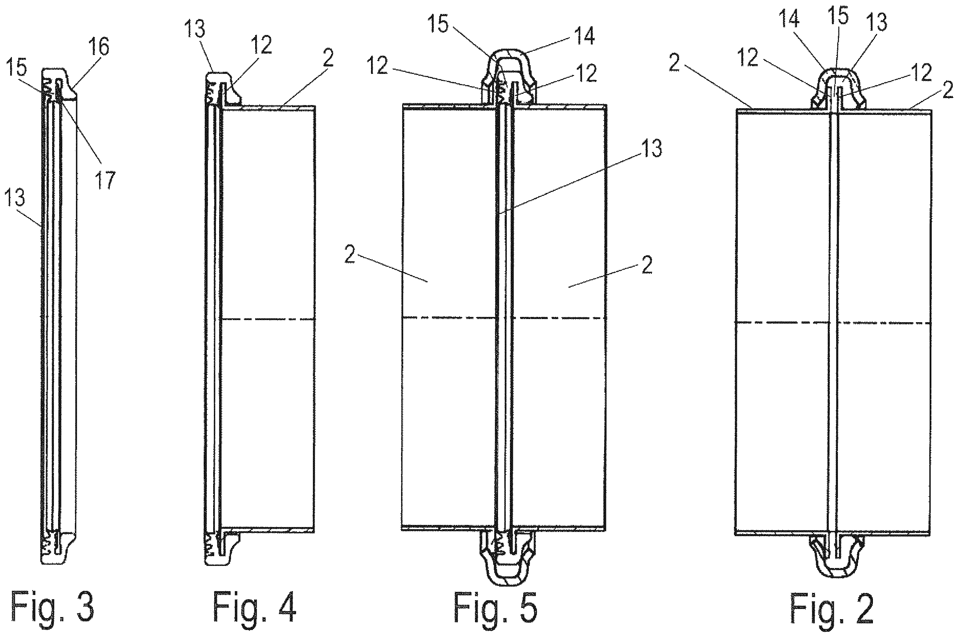

Bei der Rohrleitungsanlage werden mindestens zwei benachbarte Rohre 2 über einen Bördeldichtring 13 verbunden, wie dies in Figur 2 gezeigt ist. Jedes Rohr 2 umfasst einen radial hervorstehenden ringförmigen Bördelrand oder Flansch 12, an dem der Bördeldichtring 13 fixiert ist. Der Bördeldichtring 13 greift dabei mit einem Steg zwischen die beiden Flansche 12 der Rohre ein, wobei die Flansche 12 über einen äußeren Spannring 14 zusammengedrückt werden, wie dies in der EP 1 245 890 beschrieben ist.

In Figur 3 ist der Bördeldichtring im Detail dargestellt. Der Steg 15, der zwischen die Flansche 12 bzw. die Bördelränder eingreift, kann glatt oder profiliert ausgebildet sein. Im Querschnitt ist der Bördeldichtring 13 U-förmig ausgebildet und umfasst neben dem Steg 15 einen äußeren Halter 16, wobei zwischen dem Steg 15 und dem Halter 16 ein Spalt 17 ausgebildet ist.

Für die Montage des Bördeldichtringes 13 kann somit der Flansch 12 in den Spalt 17 des Bördeldichtringes 13 eingefügt werden, wie dies in Figur 4 gezeigt ist. Der vorfixierte Bördeldichtring 13 kann dann als Anlagefläche für einen Flansch 12 eines weiteren Rohres 2 dienen, um dann anschließend den Spannring 14 zu fixieren.

Das Material des Bördeldichtringes 13 umfasst einen metallischen Anteil, der in dem Metalldetektor 4 detektierbar ist. Der metallische Anteil ist dabei homogen in dem Material des Bördeldichtringes verteilt, so dass unabhängig davon, welcher Bestandteil des Bördeldichtringes 13 sich löst bzw. im Produktionsprozess zerkleinert wird, eine Erfassung an dem Metalldetektor 4 möglich ist. Der Anteil an metallischem Material kann zwischen 0,5 Gew.-% und 10 Gew.-%, insbesondere 1 Gew.-% bis 3 Gew.-%, betragen. Die metallischen Partikel weisen dabei vorzugsweise eine Größe kleiner 40 µm, insbesondere kleiner 30 µm, auf und sind im Wesentlichen homogen in dem Bördeldichtring 13 verteilt.

Damit der Bördeldichtring trotz der Zufügung eines metallischen Anteils ausreichend Dichteeigenschaften besitzt, kann die Shore-Härte A nach DIN 53505-A bei 23 °C und D = 6 mm im Bereich zwischen 50 bis 65, insbesondere 54 bis 58, betragen.

Der Bördeldichtring ist vorzugsweise auf Basis eines Polydimethylsiloxans hergestellt und mit weiteren Füllstoffen, Färbemitteln und anderen Bestandteilen neben dem metallischen Anteil versehen.

Vorzugsweise ist der Bördeldichtring mit einer Farbe eingefärbt, um diesen im Produktionsprozess optisch besser erkennen zu können. Beispielsweise kann der Bördeldichtring 13 blau eingefärbt sein, was ein gerade in Lebensmittelprozessen eine selten vorkommende Farbgestaltung ist. Auch andere Einfärbungen können vorgenommen werden.

### Bezugszeichenliste

- 1: Vorrichtung
- 2: Rohr
- 3: Verbindungsstelle
- 4: Metalldetektor
- 5: Rohr
- 6: Detektorgehäuse
- 7: Rahmen
- 8: Schleuse
- 9: Klappe
- 10: Abzweigung
- 12: Flansch
- 13: Bördeldichtring
- 14: Spannring
- 15: Steg
- 16: Halter
- 17: Spalt

## Patentansprüche

1. Bördeldichtring (13) zur Abdichtung einer Rohrverbindung, wobei der Bördeldichtring (13) aus einem Material mit einem metallischen Anteil hergestellt ist und einen organischen Materialanteil mit Polydimethylsiloxan aufweist, wobei der metallische Anteil im Wesentlichen homogen in dem Bördeldichtring (13) verteilt ist, **dadurch gekennzeichnet, dass** die metallischen Partikel eine maximale Größe von weniger als 100 µm besitzen und der Bördeldichtring (13) aus einem extrudierten Strang hergestellt ist, der an einer Nahtstelle durch Vulkanisation fixiert ist.

2. Bördeldichtring nach Anspruch 1, **dadurch gekennzeichnet, dass** der metallische Anteil zwischen 0,5 Gew.-% und 10 Gew.-%, insbesondere 1 Gew.-% bis 3 Gew.-%, beträgt.

3. Bördeldichtring nach Anspruch 1 oder 2, **dadurch gekennzeichnet, dass** die metallischen Partikel eine maximale Größe von weniger als 60 µm, insbesondere weniger 40 µm, besitzen.

4. Bördeldichtring nach einem der Ansprüche 1 bis 3, **dadurch gekennzeichnet, dass** als metallische Partikel Eisenpartikel eingesetzt werden, insbesondere auch Eisenoxidpartikel.

5. Bördeldichtring nach einem der Ansprüche 1 bis 4, **dadurch gekennzeichnet, dass** der Bördeldichtring (13) eine Shore-Härte nach DIN 53505-A bei 23°C und d = 6 mm von 50 bis 65 aufweist.

6. Bördeldichtring nach einem der Ansprüche 1 bis 5, **dadurch gekennzeichnet, dass** Bördeldichtring (13) eine Reißfestigkeit nach DIN 53504-S1 bei 23 °C und d = 2 mm von 7 bis 11 N/mm², insbesondere 8 bis 10 N/mm² aufweist.

7. Bördeldichtring nach einem der Ansprüche 1 bis 6, **dadurch gekennzeichnet, dass** der Bördeldichtring eine Reißdehnung nach DIN 53504-S1 bei 23 °C und d = 2 mm von über 300 %, insbesondere über 400 %, aufweist.

8. Bördeldichtring nach einem der Ansprüche 1 bis 7, **dadurch gekennzeichnet, dass** der Bördeldichtring (13) eine Rückprallelastizität nach DIN 53512 bei 23 °C und d = 12 mm zwischen 40 % bis 60 %, insbesondere 45 % bis 55 %, aufweist.

## Claims

1. Flared sealing ring (13) for sealing a pipe connection, the flared sealing ring (13) being made of a material with a metallic portion and having an organic material portion with polydimethylsiloxane, the metallic portion being distributed substantially homogeneously in the flared sealing ring (13), **characterised in that** the metallic particles have a maximum size of less than 100 µm and the flared sealing ring (13) is made of an extruded strand which is fixed at a seam by vulcanisation.

2. Flared sealing ring according to claim 1, **characterized in that** the metallic content is between 0.5% and 10% by weight, in particular 1% to 3% by weight.

3. Flared sealing ring according to claim 1 or 2, **characterized in that** the metallic particles have a maximum size of less than 60 µm, in particular less than 40 µm.

4. Flared sealing ring according to one of claims 1 to 3, **characterized in that** iron particles are used as the metallic particles, in particular also iron oxide particles.

5. Flared sealing ring according to one of claims 1 to 4, **characterized in that** the flared sealing ring (13) has a Shore hardness according to DIN 53505-A at 23°C and d = 6 mm of 50 to 65.

6. Flared sealing ring according to one of claims 1 to 5, **characterised in that** the flared sealing ring (13) has a tearing strength according to DIN 53504-S1 at 23°C and d = 2 mm of 7 to 1 1 N/mm², in particular 8 to 10 N/mm².

7. Flared sealing ring according to one of claims 1 to 6, **characterized in that** the flared sealing ring has an elongation at break according to DIN 53504-S1 at 23°C and d = 2 mm of more than 300%, in particular more than 400%.

8. Flared sealing ring according to one of claims 1 to 7, **characterised in that** the flared sealing ring (13) has a rebound elasticity according to DIN 53512 at 23°C and d = 12 mm of between 40% to 60%, in particular 45% to 55%.

## Revendications

1. Bague d'étanchéité à bord rabattu (13) permettant de garantir l'étanchéité d'un raccordement de tubes, cette bague d'étanchéité (13) étant réalisée en un matériau ayant une proportion de métal et comportant une proportion de matériau organique renfermant du polydimethyl siloxane, la proportion de métal étant répartie de manière essentiellement homogène dans la bague d'étanchéité (13),
**caractérisée en ce que**
les particules métalliques ont une dimension maximum de moins de 100 µm et la bague d'étanchéité (13) est obtenue à partir d'un cordon extrudé qui est fixée par vulcanisation sur un emplacement de jointure.

2. Bague d'étanchéité à bord rabattu conforme à la revendication 1,
**caractérisée en ce que**
la proportion de métal est située entre 0,5% en poids et 10% en poids, en particulier entre 1% en poids et 3% en poids.

3. Bague d'étanchéité à bord rabattu conforme à la revendication 1 ou 2,
**caractérisée en ce que**
les particules métalliques ont une dimension maximum de moins de 60 µm, en particulier de moins de 40 µm.

4. Bague d'étanchéité à bord rabattu conforme à l'une des revendications 1 à 3,
**caractérisée en ce qu'**
en tant que particules métalliques on met en œuvre des particules de fer, en particulier également des particules d'oxyde de fer.

5. Bague d'étanchéité à bord rabattu conforme à l'une des revendications 1 à 4,
**caractérisée en ce qu'**
elle a une dureté shore selon DIN 53505-A à 23°C pour d = 6 mm de 50 à 65.

6. Bague d'étanchéité à bord rabattu conforme à l'une des revendications 1 à 5,
**caractérisée en ce qu'**
elle a une résistance au déchirement selon DIN 53504-S1 à 23°C pour d = 2 mm de 7 à 11 N/mm² en particulier de 8 à 10 N/mm².

7. Bague d'étanchéité à bord rabattu conforme à l'une des revendications 1 à 6,
**caractérisée en ce qu'**
elle a un allongement à la rupture selon DIN 53504-S1 à 23°C pour d = 2 mm de plus de 300%, en particulier de plus de 400%.

8. Bague d'étanchéité à bord rabattu conforme à l'une des revendications 1 à 7,
**caractérisée en ce qu'**
elle a une résilience selon DIN 53512 à 23°C pour d = 12 mm entre 40% et 60%, en particulier entre 45% et 55%.
